(19) **Europäisches Patentamt**

**European Patent Office**

**Office européen des brevets**

(11) Publication number: **0 076 553**
**B1**

(12) **EUROPEAN PATENT SPECIFICATION**

(45) Date of publication of patent specification: **14.05.86**

(51) Int. Cl.⁴: **G 01 B 17/00, G 01 S 15/88**

(21) Application number: **82201238.1**

(22) Date of filing: **04.10.82**

(54) **System for measuring parameters of a tubular test object.**

(30) Priority: **05.10.81 NL 8104526**

(43) Date of publication of application:
**13.04.83 Bulletin 83/15**

(45) Publication of the grant of the patent:
**14.05.86 Bulletin 86/20**

(84) Designated Contracting States:
**BE DE FR GB IT**

(56) References cited:
**EP-A-0 017 744**
**FR-A-2 393 268**
**GB-A-2 046 911**
**NL-A-7 703 352**
**US-A-4 008 603**
**US-A-4 022 055**

(73) Proprietor: **Nucon Engineering & Contracting B.V.**
**Aemstelborgh Weesperzijde 150**
**NL-1097 DS Amsterdam (NL)**

(72) Inventor: **Haesen, Wilhelmus Maria Josephus**
**Hoendiep 27**
**NL-3313 VA Dordrecht (NL)**

(74) Representative: **Urbanus, Henricus Maria, Ir. et al**
**c/o Vereenigde Octrooibureaux Nieuwe Parklaan 107**
**NL-2587 BP 's-Gravenhage (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates in general to a system for testing a pipe-shaped or tubular test object, comprising a transducer for transmitting a test signal to an inner wall portion of said test object and receiving echo signal complexes reflected from the inner wall portion of said test object, respectively, a first reflector means having a single reflecting surface disposed with respect to said transducer and the inner wall of said test object, such that a first portion of a test signal and the corresponding echo signal complex are directed to travel in a predetermined sectional plane of said test object, and are guided along a first transmission path between said transducer and said test object respectively; and a second reflector means disposed with respect to said transducer and the inner wall of said test object, such that a second portion of said test signal and the corresponding echo signal complex are directed to travel in said predetermined sectional plane, and are guided along a second transmission path between said transducer and said inner wall of said test object.

A system for the above type is known from French patent application FR—A—2,393,268. This prior art relates to devices for accurately centering a monitor or measuring unit within the interior of a tube or pipe-shaped object, without the necessity of using mechanical centering means. This prior art is capable to accomplish the centering function with high accuracy. However, because in practice echo signal complexes are received, received echos are apt to interfere with each other thereby making it practically unfeasible to derive quantitative results from such received echo signal complexes.

It is a general object of the present invention to provide a system for measuring parameters of a pipe-shaped or tubular test object on the basis of recieved echo signal complexes. For the determination of relevant parameters of such a test object, such as outer diameter, inner diameter, wall thickness, ellipticity and excentricity, use is made in general of a pulse-echo technique of the above described type, in which the desired parameters can be calculated from transit times of echo pulse complexes arising due to a measurement signal pulse transmitted to the object being measured.

More in particular it is an object of the present invention to provide a measurement system designed to perform the above measurements within the interior of pipe-shaped or tubular test objects of comparatively small diameters. It is then a requirement for the transducer for the transmission of measurement signal pulses, e.g. ultrasound pulses, to the test object, or for receiving echo signal pulse complexes arising from reflections against the object being measured, to fit within the object being measured in combination with a holder for the transducer.

According to a prior art solution as proposed in the patent US—A—4,008,603, the transducer employed therein is adapted to transmit and receive signals in the axial direction, while further use has been made of a reflector rotatable about the main axis of the transducer, and positioned at a certain angle, in general 45 degrees, relative to the main axis.

Such a configuration, however, has the disadvantage that the accuracy of the measurement to a great extent depends on the degree in which the axis of rotation of the reflector and the main axis of the transducer coincide. Due to oscillations of the axis of rotation of the reflector relative to the main axis of the transducer, and hence relative to the axis of the object being measured, the measurements regarding the outer diameter, inner diameter, ellipticity, and excentricity can no longer be an unambiguously defined, because the reference, i.e., the axis of the object being measured apparently is moving in relation to the transducer. Owing to the unbalance of the reflector, the effect of undesirable vibrations is re-inforced still further, which detrimentally affects the accuracy of the measurements.

Now it is an object of the present invention to overcome the deficiencies outlined above, and to provide a system which is capable to accurately measure the transit times of echo signal complexes so that the desired object parameters can be appropriately calculated therefrom.

For achieving the above objects in a system of the invention said reflector means is a composite reflector means having a plurality of separate reflecting surfaces each of said reflecting surfaces being disposed relative to the other ones of said reflecting surfaces and relative to said first reflector means in such a manner that the transmission path length of said second transmission path is greater than the length of said first transmission path by such an amount that the difference between the transmission-reception time interval corresponding to the first portion of the test signal and the transmission-reception time interval corresponding to the second portion of said test signal is of such a magnitude that said both echo signal complexes have no influence on each other.

By adding magnitudes representing the transit times of the respective echo pulses complexes which have been propagated along the first transmission path and the second transmission path, the measurement of for example the inner diameter becomes independent of the oscillations of the transducer holder, while interfering effects are eliminated. In fact, if the transducer holder moves towards one side, the transit time associated with that one side becomes smaller by an amount of $\delta$, whereas the transit time as measured for the other side is increased by the same amount. The sum of the transit times thus achieved then is independent of the position which the transducer holder occupies in relation to the axis. The same applies to measurements regarding to the outer diameter, ellipticity, and excentricity.

A further advantage is that the measuring velocity determined by the wall thickness measurement, can be enlarged by a factor of two. This advantage in as far as the centering procedure is concerned, can also be achieved with the prior art as disclosed in the aforementioned French patent application FR—A—2,393,268.

In a simple embodiment of the invention the composite reflector means further comprises an auxiliary reflecting surface facing the transducer and disposed at such an angle (90-α) to the main axis of the transducer that the second transmission path is composed of three rectilinear segments.

In another embodiment of the invention the composite reflector means further comprises an auxiliary reflecting surface facing said transducer and an auxiliary reflecting surface facing said reflecting surface facing away from said transducer, which two auxiliary reflecting surfaces are so disposed relative to said transducer and said reflecting surface facing away from said transducer that the second transmission path is composed of four rectilinear segments.

Inaccuracies in measurements due to vibrations of the transducer holder are completely eliminated in a system of the invention wherein said first reflector means and said second reflector means are so disposed relative to each other that the two portions of the test signal are transmitted to the test object respectively in two diametrally opposite directions.

In a compact and reliable embodiment of the invention said first reflector means and said second reflector means are bodily rotatable about the main axis of the transducer.

In order to further increase the measuring velocity, it is further of advantage to combine a plurality of systems of the embodiments described hereinbefore.

In further illustration of the invention, some embodiments thereof will be described hereinafter by way of example with reference to the accompanying drawings, in which:

Fig. 1 is a diagrammatic illustration of a first embodiment of a measurement system according to the invention;

Fig. 2 is a diagrammatic illustration of a different embodiment of a measurement system according to the invention; and

Fig. 3 is a diagrammatic illustration of an embodiment of the invention designed to increase the measurement velocity.

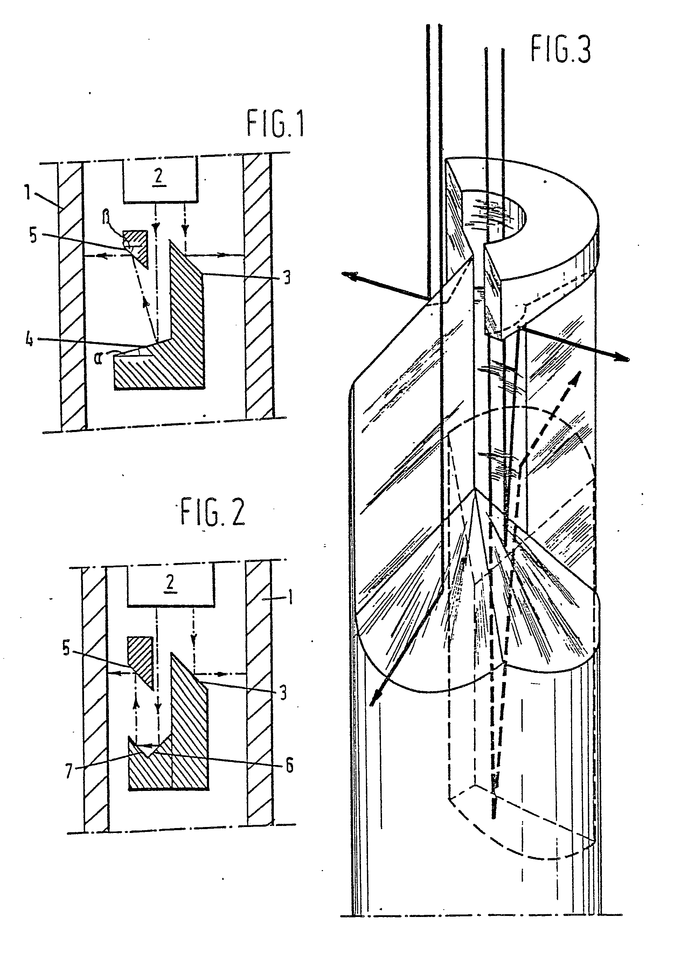

In Fig. 1, a portion of a pipe-shaped test object, of which the relevant parameters must be measured from the inside, is illustrated in cross-section and designated by 1. Diagrammatically shown at 2 is a holder with a transducer therein for transmitting measurement signals, in particular measurement signal pulses, to the test object, in particular the wall of pipe section 1, and for receiving echo signals, in particular echo signal pulses, reflected by the wall of pipe section 1. This holder/transducer is placed in the interior of pipe section 1 in such a manner that its geometrical main axis substantially coincides with the axis of pipe section 1. Furthermore, the transducer is arranged to transmit and receive a beam of measurement signals and echo signals, respectively, corresponding to the cross-section thereof.

Disposed in opposition to the transducer is a first reflector face 3 facing the same, whereby a measurement signal transmitted from the transducer is deflected with a given angle, in the embodiment shown, 90°, into the direction of the wall of pipe section 1. This first and singular reflector surface defines between the transducer and the wall of pipe section 1 a first transmission pipe via which a measurement signal wave, in particular the measurement signal pulse, transmitted from the transducer, extending in a cross-sectional plane of pipe section 1, is directed to the wall of this pipe section. There is furthermore provided in opposition to the transducer a second and composite reflector comprising an auxiliary reflector surface 4 facing the transducer and a reflector surface 5, the reflector surface 4 being positioned at such an angle to the geometrical longitudinal axis of the holder/transducer that a measurement signal wave, in particular the measurement signal pulse falling from the transducer on this auxiliary reflector surface is reflected to reflector surface 5. This reflector surface 5 is so disposed relatives to reflector surface 3 and transducer 2 that a measurement signal wave coming from auxiliary reflector surface 4 and falling on surface 5, extending in the same cross-sectional plane of pipe section 1, is directed to the inner wall of this pipe section.

The auxiliary reflector surface 4 and reflector surface 5 define a second transmission path composed of three rectilinear segments. If now, a measurement signal pulse is transmitted from transducer 2, an echo pulse caused by reflection against the inner wall of the pipe section 1 will be received by the transducer via the above first transmission path, for example, after an interval $t_1$. An echo pulse caused by reflection against the inner wall and reaching the transducer via the above second transmission path will be received by the transducer, e.g. after an interval $t_2$. The sum of the time intervals $t_1$ and $t_2$ is a measure for the interior diameter of pipe scetion 1. Care has been taken, by correctly dimensioning the reflector composed of auxiliary reflector surface 4 and reflector surface 5, that the time interval $t_2$ is relatively long relative to time interval $t_1$, and this to such an extent that the difference between the two time intervals of a measurement signal transmitted to the test object and the first echo signal complex received via the relevant first transmission path and the second echo signal complex received via the relevant second transmission path is so great that these two each signal complexes do not influence one another. An echo signal complex is a set of echo signals as caused by a transmitted measurement signal, and which set comprises a front wall echo and a plurality of rear wall echoes. In order to achieve that the measurement signal beams from reflector surfaces 3 and 5 are directed to extend in the same cross-sectional plane of the pipe section, the positional angle β of reflector surface 5 equals 45-α, in which α represents the angle which the auxiliary reflector' surface 4 encloses with the relevant cross-sectional plane through the pipe section 1. In a practical embodiment, reflector surfaces 3 and 5, and also auxiliary reflector surface 4 are combined to form one whole, which is bodily rotatable about the geometrical longitudinal axis of the transducer. In this arrangement, reflector surface 3 and the composite reflector are so positioned relatively to each other that the measurement signal waves from reflector surfaces 3 and 5 are directed diametrically and in opposite directions to the wall of pipe section 1.

Naturally such an arrangement also permits measuring the echo signal caused by reflections against the external wall of pipe section 1, the time intervals measured for the first and the second transmission path being, respectively, $t'_1$ and $t'_2$. Here too, the outer diameter of the pipe section can be determined by any summation of measured time intervals $t'_1$ and $t'_2$ without the accuracy of measurement being adversely affected by vibrations of the transducer. The other parameters, such as ellipticity, eccentricity and wall thickness, can also in principle be determined using the time intervals to be measured, such as $t_1$, $t'_1$, $t_2$ and $t'_2$.

Of the configurations shown in Fig. 2, parts having a counterpart in the configuration illustrated in Fig. 1, are designated by the same reference numerals. The embodiment of Fig. 2 is only different from that of Fig. 1 in that, instead of a single auxiliary reflector surface, use is made of a pair of auxiliary reflector surfaces 6 and 7, disposed at an angle to each other. In this embodiment according to Fig. 2, a second transmission path is composed of four rectilinear segments. For the rest, the embodiments of Figs. 1 and 2 are identical as far as operation is concerned.

For the sake of completeness, it is noted that, if ultrasound pulses are used for the measurement signal, the pipe to be tested is filled with a coupling fluid, such as water.

By combining a plurality of the reflector assemblies of Figs. 1 and 2 to form one whole by means of multiple facet mirrors, the measuring velocity can be increased. Fig. 3 diagrammatically illustrates how, in this way, two sets of diametrically and oppositely directed signal waves can be produced. In this way the measuring velocity can be further increased by a factor 2. Naturally, with a large number of facets, the measuring velocity can be correspondingly increased. According to the invention it is thus possible to carry out the measurements of the relevant parameters (dimensions) of a pipe-shaped or tubular test object without the problem of pulse interference, and without the accuracy of the measurements being adversely affected by the relative movement of the transducer holder relative to the reference, such as the axis of the pipe. With each measurement, the parameters such as outer diameter, inner diameter, ellipticity, eccentricity and wall thickness can be derived.

## Claims

1. A system for testing a pipe-shaped or tubular test object (1), comprising a transducer (2) for transmitting a test signal to an inner wall portion of said test object and receiving echo signal complexes reflected from the inner wall portion of said test object, respectively, a first reflector means (3) having a single reflecting surface disposed with respect to said transducer and the inner wall of said test object, such that a first portion of a test signal and the corresponding echo signal complex are directed to travel in a predetermined sectional plane of said test object, and are guided along a first transmission path between said transducer and said test object respectively; and a second reflector means (4, 5; 5, 6, 7) disposed with respect to said transducer and the inner wall of said test object, such that a second portion of said test signal and the corresponding echo signal complex are directed to travel in said predetermined sectional plane, and are guided along a second transmission path between said transducer and said inner wall of said test object, characterised in that said second reflector means is a composite reflector means having a plurality of separate reflecting surfaces (4, 5; 5, 6, 7) each one of said reflecting surfaces being disposed relative to the other ones of said reflecting surfaces and relative to said first reflector means (3) in such a manner that the transmission path length of said second transmission path is greater than the length of said first transmission path by such an amount that the difference between the transmission-reception time interval corresponding to the first portion of the test signal and the transmission-reception time interval corresponding to the second portion of said test signal is of such a magnitude that said echo signal complexes have no influence on each other.

2. A system according to claim 1, characterised in that the composite reflector means (4, 5; 5, 6, 7) comprises a reflecting surface (5) facing away from the transducer, and disposed at a predetermined angle (90-β) relative to the main axis of the transducer (2).

3. A system according to claim 2, characterised in that the composite reflector means (4, 5) further comprises an auxiliary reflecting surface (4) facing the transducer and disposed at such an angle (90-α) to the main axis of the transducer that the second transmission path is composed of three rectilinear segments.

4. A system according to claim 2, characterised in that the composite reflector means (5, 6, 7) further comprises an auxiliary reflecting surface (6) facing said transducer (2) and an auxiliary reflecting surface (7) facing said reflecting surface (5) facing away from said transducer, which two auxiliary reflecting surfaces (6, 7) are so disposed relative to said transducer (2) and said reflecting surface (5) facing away from said transducer that the second transmission path is composed of four rectilinear segments.

5. A system to any one of the preceding claims 1—4, characterised in that said first reflector means (3) and said reflector means (4, 5; 5, 6, 7) are so disposed relative to each other that the two portions of the test signal are transmitted to the test object respectively in two diametrically opposite directions.

6. A system according to any one of the preceding claims 1—5, characterised in that said first reflector means (3) and said second reflector means (4, 5; 5, 6, 7) are bodily rotatable about the main axis of the transducer (2).

7. A system for measuring parameters of a pipe-shaped or tubular test object, comprising a plurality of systems according to claim 5, or to claim 6 when dependent from claim 5.

## Patentansprüche

1. System zum Messen röhrenartiger oder röhrenförmiger Testobjekte (1), umfassend einen Wandler (2) zur Übermittlung eines Meßsignals zu einem Innenwandabschnitt des Testobjektes bzw. Empfangen eines Echosignalkomplexes reflektiert vom Innenwandabschnitt des Testobjektes, eine erste Reflektoreinrichtung (3) mit einer einzelnen reflektierenden Oberfläche, so angeordnet in Bezug auf den Wandler und die Innenwand des Testobjektes, daß ein erster Teil eines Meßsignales und der ensprechende Echosignalkomplex so gerichtet sind, daß sie in einen vorbestimmten ebenen Abschnitt des Testobjektes wandern, und entlang eines ersten Übertragungsweges zwischen dem Wandler und dem Testobjekt geführt werden; und eine zweite Reflektoreinrichtung (4, 5; 5, 6, 7) so angeordnet in Bezug auf den Wandler und die Innenwand des Testobjektes, daß ein zweiter Teil des Meßsignales und des entsprechenden Echosignalkomplexes so gerichtet ist, daß es in den vorbestimmten ebenen Abschnitt wandert und entlang eines zweiten Übertragungsweges zwischen dem Wandler und der Innenwand des Testobjektes geführt wird, gekennzeichnet dadurch, daß die zweite Reflektoreinrichtung eine zusammengesetzte Reflektoreinrichtung ist, welche eine Vielzahl von separaten reflektierenden Oberflächen (4, 5; 5, 6, 7) aufweist, wobei jede dieser reflektierenden Oberflächen und in Bezug zu der anderen reflektierenden Oberflächen und in Bezug zu der ersten Reflektoreinrichtung (3) so angeordnet ist, daß die Übertragungsweglänge des zweiten Übertragungsweges um solch ein Maß größer ist als die Länge des ersten Übertragungsweges, daß die Differenz zwischen dem Übertragungs-Empfangszeitintervall entsprechend dem ersten Teil des Meßsignales und dem Übertragungs-Empfangszeitintervall entsprechend dem zweiten Teil des Meßsignales von solcher Größe ist, daß die beiden Echosignalkomplexe keinen Einfluß aufeinander haben.

2. System gemäß Anspruch 1, gekennzeichnet dadurch, daß die zusammengesetzten Reflektoreinrichtungen (4, 5; 5, 6, 7) eine reflektierende Oberfläche (5) abgekehrt von dem Wandler, und angeordnet mit einem vorbestimmten Winkel (90-β) in Bezug zur Hauptachse des Wandlers (2) umfaßen.

3. System gemäß Anspruch 2, gekennzeichnet dadurch, daß die zusammengesetzten Reflektoreinrichtungen (4, 5) ferner eine zusätzlich relektierenden Oberfläche (4) umfassen, zugekehrt zu dem Wandler und angeordnet in einem derartigen Winkel (90-α) zu der Hauptachse des Wandlers, daß der zweite Übertragungsweg aus drei gradlinigen Segmenten zusammengesetzt ist.

4. System gema8ß Anspruch 2, gekennzeichnet dadurch, daß die zusammengesetzten Reflektoreinrichtungen (5, 6, 7) ferner eine zusätzliche reflektierende Oberfläche (6) umfassen, zugekehrt zum Wandler (2) und eine zusätzliche reflektierende Oberfläche (7), zugekehrt zur reflektierenden Oberfläche (5), abgekehrt von dem Wandler, wobei die zwei zusätzlichen reflektierenden Oberflächen (6, 7) in Bezug zum Wandler (2) und die reflektierende Oberfläche (5) abgekehrt vom Wandler derart angeordnet sind, daß der zweite Übertrangungsweg aus vier gradlinigen Segmenten zusammengesetzt ist.

5. System gemäß einem der vorstehenden Ansprüche 1 bis 4, gekennzeichnet dadurch, daß die erste Reflektoreinrichtung (3) und die Reflektoreinrichtungen (4, 5; 5, 6, 7) so in Bezug zueinander angeordnet sind, daß die zwei Teile des Meßsignales zum Testobjekt in zwei diametral entgegengesetzte Richtungen übermittelt werden.

6. System gemäß einem der vorstehenden Ansprüche 1 bis 5, gekennzeichnet dadurch, daß die erste Reflektoreinrichtung (3) und die zweiten Reflektoreinrichtungen (4, 5; 5, 6, 7) körperlich um die Hauptachse des· Wandlers (2) drehbar sind.

7. System zum Messen von Parametern rohrartiger oder röhrenförmiger Testobjekte, umfassen eine Vielzahl von Systemen gemäß Anspruch 5, oder Anspruch 6, abhängig von Anspruch 5.

## Revendications

1. Système pour tester un objet à tester (1) en forme de tuyau ou tubulaire comprenant un transducteur (2) pour transmettre un signal de test à une partie de la paroi interne dudit objet à tester et recevoir des signaux d'échos complexes réfléchis par ladite partie de paroi interne dudit objet à tester respectivement, des premiers moyens réfléchissants (3) ayant une seule surface réfléchissante disposée par rapport audit transducteur et à la paroi interne dudit objet à tester de façon telle qu'une première partie du signal de test et la partie correspondante du signal d'écho complexe soient dirigés pour se propager dans un plan de section prédéterminé dudit objet à tester et sont guidés le long d'un premier chemin de transmission entre ledit transducteur et ledit objet à tester respectivement, et des seconds moyens réfléchissants (4, 5; 5, 6, 7) disposés par rapport audit transducteur et à la paroi interne dudit objet à tester de façon telle qu'une seconde partie du signal de test et la partie correspondante du signal d'écho complexe soient dirigés pour se propager dans ledit plan de section prédéterminé et sont guidés le long d'un second chemin de transmission entre ledit transducteur et ladite paroi interne dudit objet à tester caractérisé en ce que lesdits seconds moyens réfléchissants sont constitués par des moyens réfléchissants composites ayant une pluralité de surfaces réfléchissantes séparées (4, 5; 5, 6, 7), chacune desdites surfaces réfléchissants étant disposée par rapport aux autres surfaces réfléchissantes et par rapport auxdits premiers moyens réfléchissants (3) d'une façon telle que la longueur de chemin de transmission dudit second chemin de transmission est plus grande que la longueur du premier chemin de transmission par une quantité telle que la différence entre l'intervalle de temps transmission-réception correspondant à la première partie du signal de test et l'intervalle de temps de transmission-réception correspondant à la seconde partie du signal de test soit d'une granduer telle que les deux signaux d'échos complexes n'ont pas d'influence l'un sur l'autre.

2. Système conforme à la revendication 1, caractérisé en ce que les moyens réfléchissants composites (4, 5; 5, 6, 7) comprennent une surface réfléchissante (5) qui fait face loin du transducteur disposée avec un angle prédéterminé (90°-β) par rapport à l'axe principal du transducteur.

3. Système conforme à la revendication 2, caractérisé en ce que les moyens réfléchissants composites (4, 5) comprennent en outre une surface réfléchissante auxiliaire (4) faisant face au transducteur et disposé avec un angle (90°-α) par rapport à l'axe principal du transducteur tel que le second chemin de transmission est composé de trois segments rectilignes.

4. Système conforme à la revendication 2, caractérisé en ce que les moyens réfléchissants composites (5, 6, 7) comprennent en outre une surface réfléchissante auxiliaire (6) faisant face audit transducteur (2) et une surface réfléchissante auxiliaire (7) faisant face à ladite surface réfléchissante (5) qui fait face loin du transducteur dans lequel les deux surfaces réfléchissantes auxiliaires (6, 7) sont disposées par rapport au transducteur (2) et à ladite surface (5) qui fait face loin du transducteur de façon que le second chemin de transmission est composé de quatre segments rectilignes.

5. Système conforme à l'une quelconque des revendications antérieures 1—4 caractérisé en ce que lesdits premiers moyens réfléchissants (3) et les moyens réfléchissants (4, 5; 5, 6, 7) sont disposés les uns par rapport aux autres de façon que les deux parties du signal de test sont transmises vers l'objet à tester respectivement selon deux directions diamètralement opposées.

6. Système conforme à l'une quelconque des revendications antérieures 1—5, caractérisé en ce que lesdits premiers moyens réfléchissants (3) et lesdits seconds moyens réfléchissants (4, 5; 5, 6, 7) sont rotatifs comme un tout autour de l'axe principal du transducteur (2).

7. Système pour mesurer des paramètres d'un objet à tester en forme du tuyau ou tubulaire comprenant une pluralité de systèmes conformes à la revendication 5 ou à la revendication 6 quand cette dernière dépend de la revendication 5.

0 076 553

FIG.1

FIG.2

FIG.3